# EUROPÄISCHE PATENTSCHRIFT

(11) **EP 0 950 999 B1**
(45) Veröffentlichungstag und Bekanntmachung des Hinweises auf die Patenterteilung: **08.01.2003**
(21) Anmeldenummer: 99110189.0
(22) Anmeldetag: 22.08.1997
(51) Int. Cl.: G07F 17/42, G07F 7/00, G07C 9/00

(54) **Datenerfassungsvorrichtung und Verfahren zum Betreiben der Vorrichtung**
Data acquisition device and method for operating the device
Dispositif pour l'acquisition de données et méthode pour l'actionnement du dispositif

(30) Priorität: 10.12.1996 DE 29621439 U
(43) Veröffentlichungstag der Anmeldung: 20.10.1999
(62) Teilanmeldung aus: 97950010.5
(73) Patentinhaber: Wagner, Ingvar, 63128 Dietzenbach (DE)
(72) Erfinder: Kösterke, Reinhard, 63768 Hösbach (DE)
(74) Vertreter: Winter, Brandl & Partner

(56) Entgegenhaltungen:
- EP-A- 0 171 380
- WO-A-92/17856
- DE-A- 3 300 850

## Beschreibung

Die vorliegende Erfindung betrifft ein Datenerfassungs- und Datenspeichermittelausgabesystem zum Erfassen von amtlichen und personenbezogenen Daten für und zum Ausgeben von personalisierten und mobilen Datenspeichermitteln sowie eine Datenerfassungsvorrichtung hierfür. Weiter betrifft die Verfahren zum Betreiben der vorgenannten Systeme und Vorrichtungen.

Die vorliegende Anmeldung ist eine Teilanmeldung zu EP 97950010.5/PCT/EP9704583 in der ein Datenerfassungs- und Datenspeichermittelausgabesystem beschrieben ist, für das die Datenerfassungsvorrichtung gemäß der vorliegenden Erfindung besonders geeignet ist. Auf die dort beschriebene Datenspeichermittelausgabevorrichtung wird vollinhaltlich Bezug genommen.

Unternehmen erhöhen gerne die Loyalität ihrer Abnehmer indem sie diesen Kundenkarten ausstellen. Hierbei füllt der Abnehmer einen Antrag mit seinen persönlichen Daten und Unterschrift aus. Dieser Vorgang ist eine nicht unerhebliche Hürde, da er auch einige Zeit beansprucht. Auch wird bei der anschließenden zentralen Antragsdateneingabe wegen unleserlicher Schrift, unvollständigen Daten u.a. ein erhöhter Aufwand verursacht. Schließlich muß zwischen dem beauftragenden Unternehmen und den Vertriebsorganisationen sowie zwischen diesen und den Verkaufsberatern vor Ort abgerechnet werden. Eine ebenfalls aufwendige Sache, die oft Klärungsbedarf erfordert.

Hierzu müssen
a) ein Vertrag zwischen Nutzer (Karteninhaber) und Kartenemittent geschlossen,
b) die Vertragsdaten (üblicherweise zentral) erfaßt,
c) die Karten personalisierte und an den Kunden verschickt, und
d) ggf. ein PIN (persönliche Geheimnummer) generiert und ein PIN-Brief (zur Sicherheit getrennt von der Karte) verschickt
werden.

Die verschiedenen Teilprozesse
beim Emittenten
   - Logistik von Werbematerial und Anträgen beim Kunden
beim Kunden
   - Antragsausgabe durch den Kartenemittenten
   - Ausfüllen des Antrages durch den Karteninhaber in spe
   - Verschicken des Antrages an den Emittenten
beim Emittenten
   - Lesen und Eingeben der (hoffentlich lesbaren) Anträge in die EDV-Anlage des Emittenten
   - Vollständigkeitsprüfung der Anträge beim Emittent
   - Nacherfassen bei unvollständigen Anträgen (ca. 25-40%)
   - Personalisieren der Karten
   - Verpacken und Versenden von Karte und (separat) PIN-Brief

Dieser gesamte Prozeß ist recht kosten- und zeitaufwendig (bis zu 6 Wochen).

In großen Unternehmen und Behörden werden für Mitarbeiter und Besucher Sicherheits- und/oder Mitarbeiterausweise ausgestellt. Dieser Vorgang ist heute noch sehr aufwendig und es vergehen einige Wochen, bis der (neue) Mitarbeiter einen Ausweis in Händen hält. Den meisten Ausweisen ist eine Zugangsberechtigung und eine Zeiterfassung zugeordnet. Je nach Sicherheitsstufe enthält der Ausweis darüber hinaus verschiedene Sicherheitsmerkmale:
- Unterschrift, Foto und Farben zum Augenscheinvergleich;
- PIN (Vermutung: nur der Berechtigte kennt den PIN);
- biometrische Daten, insbesondere Foto, Stimme, Fingerabdruck, etc. zum maschinellen Vergleich;
- Chip mit Algorithmen (digitale Unterschrift, Private und Public Key);

Das Thema Sicherheit wird in Zukunft wesentlich stärker beachtet werden. Entsprechend werden Sicherheitssysteme und deren Komponenten mehr Beachtung finden müssen.

Einwohnermeldeämter, Sozialämter, Landratsämter Trustcenter (Stellen die in zukunft für die Ausgabe und Verwaltung von Public und Private Keys zuständig sein werden), etc. sind häufig mit der Aufgabe betraut, Ausweise auszustellen oder deren Ausstellung zu veranlassen. Hier werden Daten des Einwohnermeldeamtes oder anderer Stellen auf ein Formular gebracht mit zusätzlichen Komponenten wie Foto, versehen und zur Ausstellung der gewünschten Ausweispapiere weitergeleitet. Auch dieser Vorgang ist zeitaufwendig und kostenintensiv.

Aus der WO-A-9.217.856 ist eine Kreditkartenausgabevorrichtung bekannt, die Kreditkarten vor Ort personalisiert. Der Benutzer muß sich dem Gerät gegenüber mit einer dem vorher bekanntgegebenem Identifikations- oder Legtimationscode (ID) legitimieren. Wsentliche Voraussetzung bei diesem Stand der Technik ist es, daß der Benutzer dem Kartenherausgeber vorher bekannt ist. Ist der Benutzer noch nicht Kunde, erhält er vom Host keine ID und wird somit vom Gerät abgewiesen.

Ausgehend von der WO-A-9.217.856 ist es daher Aufgabe der vorliegenden Erfindung eine Datenerfassungsvorrichtung anzugeben, bei dem sich die Datenerfassung für personalisierte und mobile Datenspeichermittel, wie Ausweisdokumente, Kundenkarten, Telefonkarten mit und ohne Chip, Geldkarten, und allgemein Chipkarten für verschiedenste Anwendungen, kostengünstiger durchführen läßt und die insbesondere auch für noch nicht bekannte Kunden geeignet ist.

Weiter ist es auch Aufgabe der Erfindung ein Verfahren zum Erfassen von personenbezogenen Daten mittels einer solchen Datenerfassungsvorrichtung anzugeben.

Die Lösung dieser Aufgaben erfolgt durch die Merkmale der Ansprüche 1 bzw. 4.

Das erfindungsgemäße Datenerfassungsvorrichtung enthält eine Leseeinrichtung, die wenigstens eine Leseeinheit für erste personalisierte und mobile Datenspeichermittel umfaßt. Zusätzlich können noch Leseeinheiten für Scheckkarten bzw. Kreditkarten, usw. vorgesehen sein. Desweiteren ist eine Anzeigevorrichtung, z.B. in Form eines Bildschirms oder eines LCD-Displays und eine Eingabetastatur vorgesehen. Weiter umfaßt die Datenerfassungsvorrichtung eine Steuereinrichtung zur dialoggeführten Eingabe der für die Ausgabe von z. B. einer Kundenkarte notwendigen Daten. Mittels einer Authentifizierungseinrichtung werden die erfaßten Daten und Dokumente, die sowohl über die Leseeinrichtung als auch über die Tastatur eingegeben worden sind, hinsichtlich Athentizität, Kompatibilität und Vollständigkeit überprüft. Mittels einer Erfassungseinrichtung für biometrische Daten, wird überprüft, ob derjenige der personenbezogene Daten eingibt auch diejenige Person ist, die er angibt zu sein. Durch Erfassen des Finger- oder Handflächenabdruckmusters, des Irismusters einer oder beider Augen, durch Aufnahme des Sprachmusters oder durch Abbildung des Gesichts der fraglichen Person und anschließendem Abgleich der erfaßten biometrischen Daten mit zuvor abgespeicherten biometrischen Daten zu der fraglichen Person wird gewährleistet, daß nur die berechtigte Person die jeweiligen mobilen und personalisierten Datenspeichermittel ausgehändigt bekommt. Dadurch, daß die wenigstens eine Leseeinheit der Leseeinrichtung eine Leseeinheit für amtliche Ausweisdokumente ist, können personenbezogene Daten von Neukunden erfaßt und an diese Karten ausgegeben werden.

Gemäß einer bevorzugten Ausgestaltung der Erfindung umfaßt die Leseeinrichtung für die ersten personalisierten und mobilen Datenspeichermittel wenigstens zwei Leseeinheiten für unterschiedliche Datenspeichermittel, z. B. für Personalausweis und Scheckkarte. Dadurch wird die Sicherheit über die Identität der Person und die der Datenerfassung erhöht, da entsprechende Daten von beiden ersten Datenspeichermitteln gegeneinander und gegen anderweitig erfaßte Daten (z. B. Foto auf dem Ausweis und aktuelle Aufnahme) abgeglichen bzw. verglichen werden können.

Bei einer bevorzugten Ausgestaltung der Erfindung gleicht das Datenerfassungsvorrichtung von außen einem Fahrkartenautomaten. Der Kunde tritt an das Gerät heran, aktiviert das Gerät mittels der Eingabetastatur und wird dann über Text auf der Anzeigeeinrichtung oder über eine optionale Sprachausgabe (Lautsprecher) aufgefordert, die Art des gewünschten zweiten personalisierten und mobilen Datenspeichermittels, z. B. eine Karte als Monatsfahrkarte, anzugeben. Dann wird er aufgefordert seinen Personalausweis in die dafür vorgesehene Leseeinheit zu schieben und die darauf enthaltenen relevanten Daten werden eingelesen und in der Speichereinrichtung zwischengespeichert. Anschließend oder parallel wird er aufgefordert eine Euroscheckkarte oder eine Kreditkarte in die dafür vorgesehene Leseeinheit zu schieben und wiederum werden die erforderlichen Daten eingelesen. Bei Euroscheckkarten bzw. Kreditkarten wird über die zweite Kommunikationseinrichtung und die Prüfeinrichtung ermittelt, ob die Karte als gestohlen gemeldet oder in sonstiger Weise gesperrt ist. Ist dies der Fall, wird der Vorgang abgebrochen.

Fehlen noch Daten, so wird der Kunde aufgefordert diese per Hand einzugeben. Die eingegebenen Daten und die eingelesenen Daten werden mittels der Prüfeinrichtung auf Konsistenz geprüft. Ist der Erfassungsvorgang abgeschlossen, werden die erfaßten und überprüften Daten mittels der ersten Kommunikationseinrichtung an die Datenspeichermittelausgabevorrichtung übermittelt.

Die Datenspeichermittelausgabevorrichtung kann zusammen mit der Datenerfassungsvorrichtung vor Ort in einem gemeinsamen Gehäuse angeordnet sein, oder aber auch an einem entfernten Ort, z.B. beim Emittenten der Ausweise oder Karten oder einem Dienstleister angeordnet sein. Im letzteren Fall erfolgt die Übergabe der Daten durch die erste Kommunikationseinrichtung mittels Modem, Datenträgeraustausch etc.

In einer Datenspeichermittelausgabevorrichtung, wie sie beispielsweise in des zugehörigen Stommanmeldung EP 97950010.5/PCT/EP9704583 beschrieben ist, wird das vom Kunden gewünschte zweite personalisierte und mobile Datenspeichermittel, z. B. eine (Chip-)Karte oder Ausweis, mit den notwendigen erfaßten und sonstigen Daten beschrieben, ggfs. mit dem relevanten Geldbetrag beladen und dann ausgegeben.

Die Schreibeinrichtung kann hierbei unterschiedliche Schreibeinheiten enthalten, so daß zum einen die jeweilige (Chip-)Karte beschrieben und beladen werden kann und zum anderen auch PIN-Briefe, Verträge und sonstige Nachrichten ausgegeben werden können.

Für den Fall, daß Datenerfassungsvorrichtung und Datenspeichermittelausgabevorrichtung getrennt voneinander angeordnet sind, ist es vorteilhaft, daß mehrere Datenerfassungsvorrichtungen funktionell mit einer gemeinsamen Datenspeichermittelausgabevorrichtung, vor Ort oder z.B. beim Emittenten, verbunden sind.

Gemäß einer weiteren vorteilhaften Ausgestaltung der Erfindung kann die Datenerfassungsvorrichtung eine Ausgabeeinrichtung für Karten mit und ohne Chip umfassen. Hierbei ist dann sinnvoll, daß die Datenerfassungsvorrichtung lediglich unpersonalisierte Karten mit und ohne Chip ausgibt, während personalisierte Karten mit und ohne Chip durch die entfernt angeordnete Datenspeichermittelausgabevorrichtung ausgegeben werden und dann an den jeweiligen Kunden verschickt werden. Bei Ausgabe von unpersonalisierten bzw. vorbezahlten Karten ist es vorteilhaft, wenn das erfindungsgemäße System zusätzlich eine Eingabeeinrichtung für Geldscheine oder Münzen umfaßt.

Neben der Bearbeitung von Personendaten und der Ausgabe personalisierter Karten oder Ausweise kann die Vorrichtung über einen zweiten Kartenspeicher auch Karten mit einem festen vorausbezahlten Betrag (analog zu der heutigen Telefonkarte) ausgeben. Wobei diese Karten entweder anonym oder auch personalisiert sein können, um z.B. Ermäßigungen/Berechtigungen für Arbeitslose u.a.m. zu gestatten.

Anspruch 4 betrifft ein Verfahren zum Betreiben der erfindungsgemäßen Datenerfassungsvorrichtung bzw. die Verwendung der Datenerfassungsvorrichtung zum Erfassen der notwendigen Daten für die Ausgabe von Ausweisdokumenten.

Die übrigen Ansprüche beziehen sich auf weitere vorteilhafte Ausgestaltungen der Erfindung.

Es ist klar, daß die Merkmale der auf die Datenerfassungsvorrichtung gerichteten Ansprüche mit der in dem Datenerfassungs- und Datenspeichermittelausgabesystem enthaltenen Datenerfassungsvorrichtung und umgekehrt kombiniert werden können.

Durch die Erfindung
- wird der Prozeß auf wenige Minuten pro Person verkürzt,
- erhält die Person i.d.R. das zweite Datenspeichermittel sofort und kann es einsetzen,
- können die Aktivitäten z. B. bundesweit beobachtet werden,
- werden die Kosten gegenüber heutigen Verfahren erheblich gesenkt,
- entfallen durch die Identitätsprüfung Risiken wie Antragsbetrug, Transportverlust und Postbetrug.

Allen durch die Erfindung erfaßten Vorgängen ist gemeinsam, daß beabsichtigt ist, die Identität einer bestimmten Person möglichst eindeutig mit einem Medium (zweites Datenspeichermittel) zu verbinden, damit dieses Medium sowohl Menschen über eine Sichtkontrolle vor allem aber Maschinen Sicherheit über die wahre Identität der Person und damit der Richtigkeit der auf dem Medium gespeicherten und auslesbaren bzw. übertragbaren Daten geben kann. Dies wird insbesondere wichtig bei der Anwendung von digitalen Signaturen (Public Key und Privat Key).

Weitere Einzelheiten, Merkmale und Vorteile der Erfindung ergeben sich aus der nachfolgenden Beschreibung beispielhafter Ausführungsformen der Erfindung anhand der Zeichnung.

Es zeigt:
Fig. 1 ein Blockschaltbild einer ersten Ausführungsform der Erfindung in Kombination mit einer Datenspeidermittelausgabevorrichtung,
Fig. 2 ein Blockschaltbild einer zweiten Ausführungsform der Erfindung in Kombination mit einer Datenspeidermittelausgabevorrichtung,
Fig. 3a eine Seitenansicht der Erfindung in Kombination mit einer Datenspeidermittelausgabevorrichtung und
Fig. 3b einen Grundriß des in Fig. 3a dargestellten Geräts.

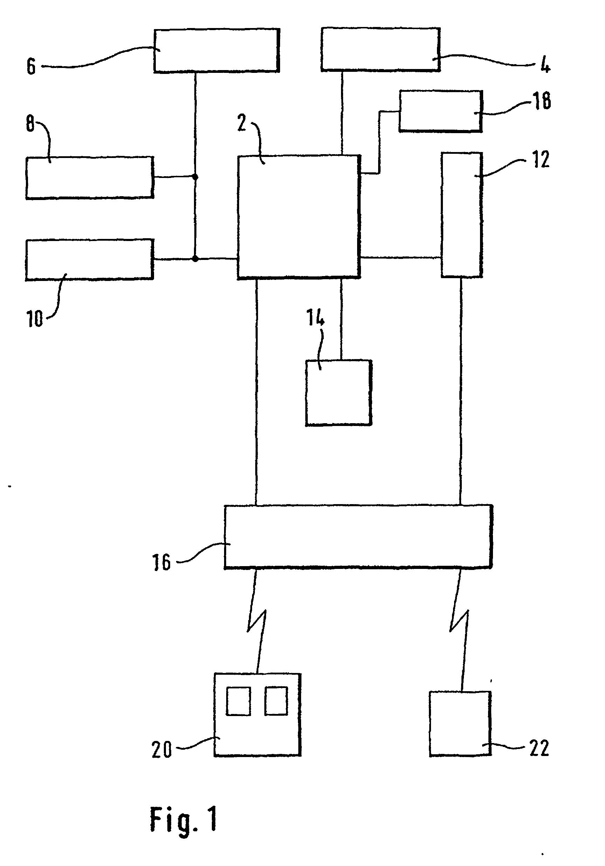

Fig. 1 zeigt das Blockschaltbild einer ersten beispielhaften Ausführungsform der Erfindung mit einer Datenerfassungsvorrichtung 1 und einer Datenspeichermittelausgabevorrichtung 3. Die Datenerfassungsvorrichtung 1 umfaßt eine Steuereinheit 2, die mit einer Eingabeeinrichtung 4 in Form einer Tastatur, einer Anzeigeeinrichtung in Form eines Bildschirmdisplays 6, einer Ausweisleseeinheit 8 und einer Scheckkartenleseeinheit 10 verbunden ist. Des weiteren ist die Steuereinheit 2 mit einer Authentifizierungseinrichtung 12, einer Speichereinrichtung 14 sowie einer Kommunikationseinrichtung 16 verbunden. Steuereinheit 2 ist auch mit einer Erfassungseinrichtung 18 für biometrische Daten, wie Sprachmuster, Irismuster, Fingerabdruckmuster, Foto, etc. verbunden. Die Authentifizierungseinrichtung 12 ist mit der Kommunikationseinrichtung 16 verbunden. Die Kommunikationseinrichtung 16 sind über On-line-Verbindungen mit einer Datenspeichermittelausgabevorrichtung 20 und mit mit einem Zentralrechner 22 der Euroscheckkartenabrechnungszentrale verbunden.

Bei dieser ersten Ausführungsform der Erfindung bzw. bei dieser Grundversion der Erfindung ergibt sich folgender Funktionsablauf:
- (Bildschirm)Text zu rechtlichen Wirksamkeit (Zustandekommen eines Vertrages, wenn Emittent den Antrag annimmt);
- Interessent schiebt seinen Bundespersonalausweis in die dafür vorgesehene Einheit;
- in dieser Einheit werden die Daten des Personalausweises gelesen: Name, Geburtstag + Ort, Adresse, Ausstellungsort, Personalausweisnummer; gegebenenfalls wird der Personalausweis auf Echtheit geprüft;
- der Inhalt wird auf dem Bildschirm dargestellt;
- der Benutzer wird gefragt, ob alles richtig gelesen wurde;
- der Benutzer wird aufgefordert durch Drücken der Bestätigungstaste zu bestätigen,
   - daß die Daten korrekt sind
   - daß er um Zusendung oder sofortige Ausstellung des auf ihn ausgestellten zweiten Datenspeichermittels bittet.

Bei dieser Grundversion wird nur die Datenerfassung durch den Kunden unterstützt. Die erfaßten Daten werden dann entweder über die Kommunikationseinrichtung on-line zum zentralen Host bzw. zur Datenspeichermittelausgabevorrichtung übermittelt oder die Übermittlung erfolgt mittels Batchmedien (Disketten, Bänder etc.) per Post.

Bei einer nicht näher dargestellten Variante dieser ersten Ausführungsform können auch vorausbezahlte Chip-Karten gekauft werden. Sei es z.B. um die Zeit bis zur Zusendung der nachladbaren und personalisierten Karte zu überbrücken oder sei es, daß der Kunde gar keine personalisierte Karte haben möchte. In diesem Fall wird dialoggeführt folgendes zusätzlich von dem Kunden verlangt:
- *Geldbetrag wählen der geladen werden soll*
- *Geld laden über:*
   *a) - Geld (Scheine oder Münzen) eingeben oder*
   *b) - Euroscheckkarte eingeben Abfrage:*
      *wieviel möchten Sie laden?*
      *Betrag eingeben: DM*

*Hinweis über Zusatzkosten z.B. das Laden kostet X% und wird automatisch über Ihr Bankkonto eingezogen.*
- Euroscheckkarte zu ladenden Betrag ggf. autorisieren
- (Chip-)Karte mit dem Betrag laden
- vorausbezahlte (nicht personalisierte) (Chip-)Karte ausgeben bzw. entnehmen lassen)

Die auf die vorausbezahlte Karte geladenen Geldbeträge werden an den Host bzw. an die Datenspeichermittelausgabevorrichtung übermittelt und können dann vom jeweiligen Kunden im Lastschriftverfahren bzw. über EC-Cash eingezogen werden.

Bei einer weiteren Variante dieser Grundversion ist vor Ort auch eine Einrichtung vorhanden, die die auszugebenden Karten mit und ohne Chip mit dem Namen des Kunden und ggf. auch einer Kartennummer bedruckt.

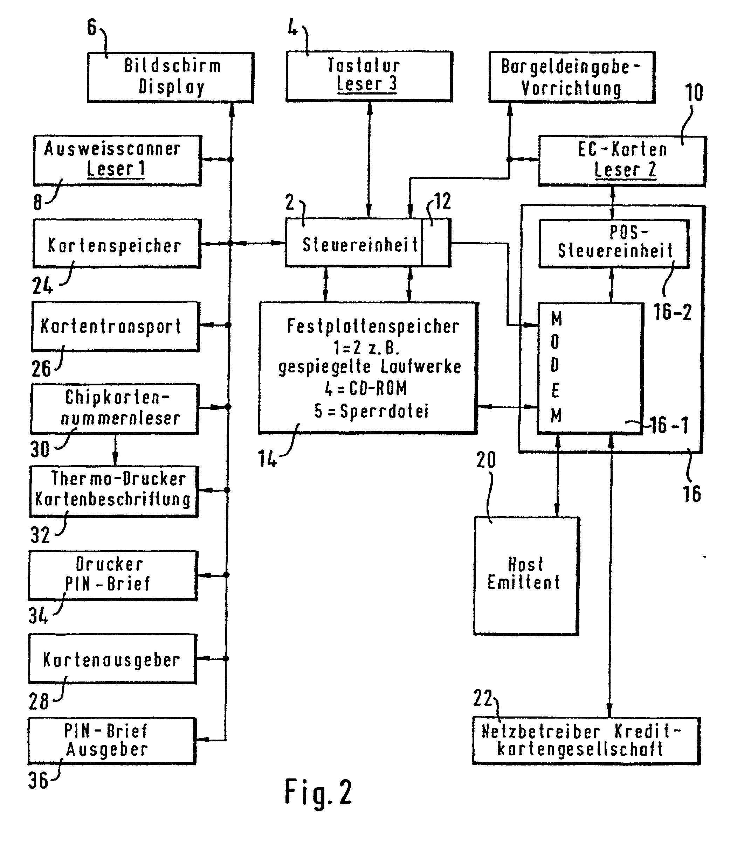

Fig. 2 zeigt das Blockschaltbild einer zweiten beispielhaften Ausführungsform der Erfindung, die Elemente der vorstehend erweiterten Grundversion und der Variationen davon miteinander kombiniert. Zusätzlich zu den Komponenten gemäß Fig. 1 sind hierbei noch folgende Komponenten mit der Speichereinheit 2 verbunden: Ein Kartenspeicher 24, eine Kartentransporteinrichtung 26, eine Kartenausgabeeinrichtung 28, ein Chipkartennummern-Schreib/Leseeinrichtung 30, eine Einrichtung 32 zum optischen Beschriften der Karten mit und ohne Chip z.B. ein Thermodrucker, ein Drucker 34 zum Drucken von PIN-Briefen, und eine PIN-Brief-Ausgabeeinheit 36. Zusätzlich ist noch gezeigt, daß die Kommunikationseinrichtung 16 ein Modem 16-1 und eine POS-Steuereinheit 16-2 umfaßt.

Der wesentliche Unterschied zur Ausführungsform gemäß Fig. 1 besteht darin, daß bei dieser zweiten Ausführungsform unmittelbar nach Eingabe der Daten vor Ort das entsprechend erstellte zweite personalisierte Datenspeichermittel, z. B. eine Karten mit und ohne Chip, ausgegeben werden kann. Über die Authentifizierungseinrichtung 12 im Zusammenspiel mit in der Speichereinrichtung 14 z.B. in Form von CD-ROM abgespeicherten Adressdaten und Sperrdateien für Scheckkarten und Kreditkarten werden die eingegebenen und eingelesenen Daten überprüft. Wird beispielsweise eine Kreditkarte oder eine Scheckkarte eingegeben, die gesperrt ist, wird die Datenerfassung und das Ausgeben einer Karte unterbrochen. Durch die Authentifizierungseinrichtung 12 werden auch die über den Ausweisleser 8 und über den EC- bzw. den Kreditkartenleser 10 eingelesenen Namen und Daten verglichen und bei Abweichung wird eine entsprechende Fehlermeldung ausgegeben. Manuell eingegebene Telefonnummern können auf diese Weise auch mit CD-Rom vorliegenden Telefonnummernverzeichnissen verglichen werden.

Das Abrufen eines bestimmten Geldbetrages über EC-Cash erfolgt folgendermaßen. Über die Anzeige 6 wird der zu ladende Geldbetrag angezeigt ggf. zusätzliche Informationen und die Gebühren für diesen Vorgang. Dann wird der Kunde zur Eingabe seiner PIN-Nummer für die EC-Karte aufgefordert. Die Transaktion wird dann über die OS-Steuereinheit 16-2 und Modem 16-1 durchgeführt und der relevante Geldbetrag kann auf die dem Kunden dann ausgegebene (Chip-)Karte übertragen werden. Beim Laden und Ausgeben der (Chip-)Karte an den Kunden wird zunächst aus dem Kartenspeicher 24 die nächste Karte ausgegeben mit dem Leser 30 wird deren Nummer ermittelt, eine PIN-Nummer zugeordnet und der zuvor erfaßte Datensatz mit Adresse, Name und ggf. Geldbetrag wird dieser Karte zugeordnet und auf die Karte geschrieben. Anschließend wird die PIN-Nummer mittels dem Drucker 34 ausgedruckt und der PIN-Brief und die (Chip-)Karte werden über die Komponenten 28 bzw. 36 ausgegeben. Zusätzlich können die erfaßten Daten natürlich auch an den Host oder Emittenten der Karten mit und ohne Chip 20 übertragen werden.

Bei weiteren vorteilhaften Ausgestaltungen der Erfindung werden anonyme, wiederaufladbare Karten mit und ohne Chip in personalisierte wiederaufladbare Karten umgewandelt. Des weiteren ist es auch möglich, vorausbezahlte Karten mit und ohne Chip in wiederaufladbare Karten umtauschen. Auch können Restbeträge aus z.B. technisch nicht mehr unterstützten alten Karten mit und ohne Chip ausgelesen und in eine neue wiederaufladbare (Chip-)Karte eingelesen werden.

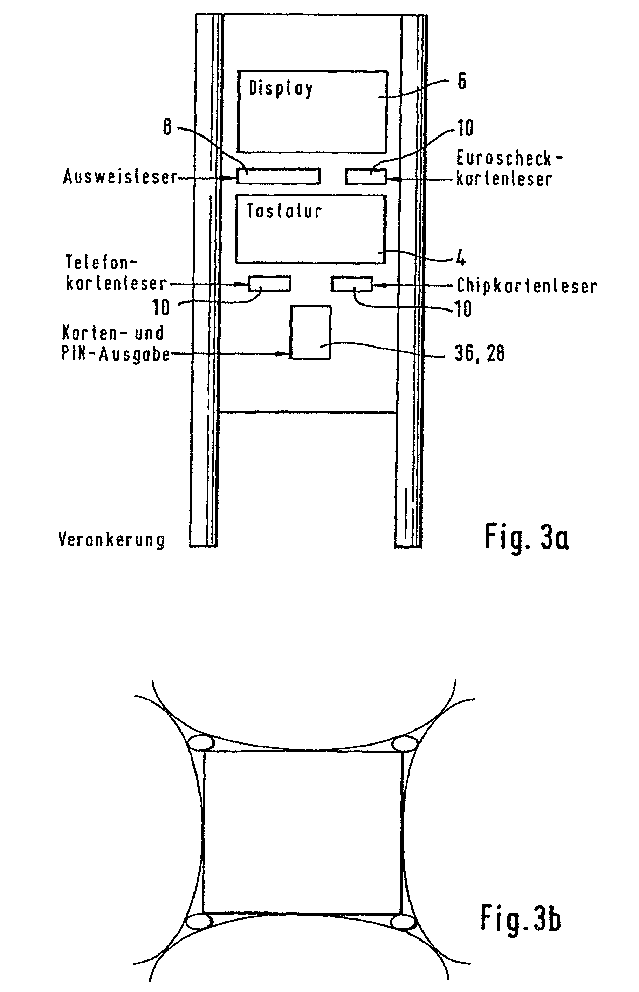

Fig. 3a und 3b zeigen eine beispielhafte Ausgestaltung der in Fig. 2 als Blockschaltbild dargestellten Ausführungsform der Erfindung. Hierbei zeigt Fig. 3b den Grundriß der Vorrichtung und Fig. 3a zeigt eine Seitenansicht mit den von außen zugänglichen Komponenten des erfindungsgemäßen Datenerfassungs- und Datenspeichermittelausgabesystems.

## Patentansprüche

1. Datenerfassungsvorrichtung (1) zum Erfassen von amtlichen und personenbezogenen Daten, die aufweist:
- eine Leseeinrichtung (8, 10) mit wenigstens einer Leseeinheit für amtliche Ausweisdokumente,
- eine Anzeigeeinrichtung (6),
- eine Eingabeeinrichtung (4) zum manuellen eingeben von Daten,
- einer Steuereinrichtung (2) zur dialoggeführten Eingabe von bestimmten pesonenbezogenen Daten über die Leseeinrichtung (8, 10) für die ersten personalisierten und mobilen Datenspeichermittel und der manuellen Eingabeeinrichtung (4),
- einer Speichereinrichtung (14) zum Zwischenspeichern der erfaßten personenbezogenen Daten,
- einer Authentifizierungseinrichtung (12) zum Überprüfen der erfaßten personenbezogenen Daten auf Authentizität,
- eine Erfassungseinheit zum Erfassen biometrischer Daten der Person, deren personenbezogene Daten erfaßt werden sollen, wobei die biometrischen Daten insbesondere Fingerabdruckmuster, Irismuster, individuelles Sprachmuster und/oder Bild des Gesichtes der Person umfassen, und
- einer Kommunikationseinrichtung (16) zum Ausgeben der hinsichtlich Authentizität überprüften personenbezogenen Daten,

2. Datenerfassungsvorrichtung (1) nach Anspruch 1 **dadurch gekennzeichnet, daß** die Leseeinrichtung wenigstens zwei Leseeinheiten (8, 10) für verschiedene amtliche Ausweisdokumente umfaßt.

3. Datenerfassungsvorrichtung nach Anspruch 1 oder 2, **dadurch gekennzeichnet, daß** die Authentifizierungseinrichtung (12) mit der wenigstens einen Kommunkationseinrichtung (18, 19) verbunden ist, um mittels der Leseeinrichtung (8, 10), der Eingabeeinrichtung (4) und/oder der Erfassungseinheit zum Erfassen biometrischer Daten eingegebene Daten mit externen Datenquellen abzugleichen.

4. Verfahren zum Erfassen von personenbezogenen Daten, mittels einer Datenerfassungsvorrichtung nach Anspruch 1, 2 oder 3, mit den Verfahrensschritten:
a) Eingeben eines amtlichen Ausweisdokuments in die Leseeinrichtung (8, 10) für amtliche Ausweisdokumente;
b) Einlesen der relevanten Daten von dem amtlichen Ausweisdokument;
c) Erfassen biometrischer Daten der Person, deren personenbezogene Daten erfaßt werden sollen;
d) Überprüfen der erfassten Daten auf Vollständigkeit, Konsistenz und Authentizität durch die Authentifizierungseinrichtung;
e) Dialoggeführte Nachfrage bei der Person, deren personenbezogene Daten erfaßt werden, über Anzeige- und manuelle Eingabeeinrichtung (6, 4) bezüglich fehlender oder widersprüchlicher Daten; und
f) Ausgabe oder Speichern der erfaßten und hinsichtlich ihrer Authentizität überprüften personenbezogenen Daten.

## Claims

1. data acquisition device (1) to register official and personal data having:
- a reading equipment (8, 10) with at least one reading unit for official identification data,
- a display device (6),
- an input device (4) for manual input of data,
- a control device (2) for dialogue controlled input of certain personal data via the reading device (8, 10) for the first personalized and mobile data memory means and the manual input device (4),
- a memory device (14) for buffer storage of the recorded personal data,
- an authentication device (12) to check the recorded personal data on authenticity,
- an enrollment unit to register biometric data of that person whose personal data shall be registered in which case the biometric data comprise, in particular, fingerprint patterns, Iris patterns, individual voice patterns and / or the image of a persons face, and
- a communication device (16) for issuing the personal data whose authenticity has been checked.

2. data acquisition device (1) as claimed in claim 1 wherein the read device comprises at least two read units (7, 10) for various official documents.

3. data acquisition device as claimed in claim 1 or 2, wherein the authentication equipment (12) is connected to the at least one communications device (18, 19) in order to match data which have been input by means of the read unit (7, 10), the input device (4) and / or the recording unit of biometric data to external data sources.

4. procedure for recording personal data, by means of a data acquisition device after claim 1, 2 or 3, with the procedure steps:
a) inputting an official identity document, into the read device (8, 10) for official identity documents;
b) reading the relevant data from official identity document;
c) registering biometric data of the person whose personal data shall be registered;
d) Checking the registered data for completeness, consistency and authenticity by the authentication device;
e) dialogue-controlled questioning of the person whose personal data are registered, via the display and manual input device (6, 4) with regard to missing or contradictory data; and
f) Issuing or storing the registered personal data whose authenticity has been checked.

## Revendications

1. un dispositif de saisie de données (1) servant à saisir des données officielles et liées à une personne, et qui comporte:
- une dispositif de lecture (8, 10) comportant au moins une unité de lecture de documents d'identité officiels,
- un dispositif d'affichage (6),
- un dispositif d'introduction (4) pour l'introduction manuelle de données,
- un dispositif de commande (2) pour l'introduction, pilotée en mode dialogue, de certain données liées à la personne par l'intermédiaire du dispositif de lecture (8, 10) pour les premiers moyens personnalisées et mobiles formant les mémoire de données, et le dispositif d'introduction manuelle (4),
- un dispositif de mémoire (14) pour la memorisation intermédiaire des données saisies, lié à une personne,
- un dispositif d'authentification des données saisies lié à la personne,
- un dispositif de saisie pour saisir des données biométriques de cette personne dont les données concernant les personnes doivent être saisies et ou les données biométriques contiennent en particulier le modèle d'empreinte digitale, modèle d'iris, le modèle linguistique individuel et / ou l'image du visage du personne,
- un dispositif de communication (16) pour distribuer les données personnelles contrôlées par rapport à authenticité.

2. dispositif de saisie de données (1) après revendication 1, ainsi caractérisé que l'installation de lecture contient au moins deux unités de lecture (7, 10) pour les documents d'identité différents.

3. dispositif de saisie de données après revendication 1 ou 2, ainsi caractérisé que l'installation d'authenticité (12) est connectée avec le au moins un dispositif de communication (18, 19) pour égaliser les données donnée des sources de données extérieures au moyen de l'installation de lecture (7, 10), l'installation d'introduction (4) et / ou le dispositif de saisie des données biométriques.

4. procédé pour saisier des données lié à une personne, au moyen d'un dispositif de saisie de données après le revendication 1, 2 ou 3, avec les pas de procédé :
a) introduction d'un document officiel d'une personne, dans le dispositif de lecture (8, 10) pour les documents officiels;
b) lectures des données importantes par le document d'identité officiel;
c) Saisir des données biométriques de cette personne dont les données concernant doivent être saisies;
d) contrôle des données saisies d'un état complet, sur l'intégrité, consistance et authenticité par le dispositif d'authenticité;
e) interrogation de cette personne, pilotée en mode de dialogue dont les données concernant les personnes sont saisies, sur le dispositif d'affichage et dispositif d'introduction manuelle (6, 4) concernant les données manquantes ou contradictoires; et
f) distribué ou mémoire des données saisis et contrôlées à l'authenticité aux données concernant les personnes.
